(19)

Europäisches
Patentamt

European
Patent Office

Office européen
des brevets

(11)  **EP 4 604 072 A1**

(12)  **EUROPEAN PATENT APPLICATION**

(43) Date of publication:
**20.08.2025  Bulletin 2025/34**

(21) Application number: **24157956.4**

(22) Date of filing: **15.02.2024**

(51) International Patent Classification (IPC):
**G06V 10/25** *(2022.01)*    **G06V 10/44** *(2022.01)*
**G06V 10/764** *(2022.01)*    **G06V 10/82** *(2022.01)*

(52) Cooperative Patent Classification (CPC):
**G06V 10/82; G06V 10/25; G06V 10/454;
G06V 10/764**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Robert Bosch GmbH
70442 Stuttgart (DE)**

(72) Inventors:
• **Huang, Haiwen
  72074 Tübingen (DE)**
• **Zhang, Dan
  71229 Leonberg (DE)**

Remarks:
Amended claims in accordance with Rule 137(2)
EPC.

(54)  **A COMPUTER IMPLEMENTED METHOD, A DATASTRUCTURE AND A DEVICE FOR FINDING A MATCHED SEMANTIC NAME FOR A REGION OF A DIGITAL IMAGE OR FOR TRAINING, IN PARTICULAR A TRANSFORMER DECODER AND/OR A PIXEL DECODER, FOR FINDING A MATCHED SEMANTIC NAME FOR A REGION OF A DIGITAL IMAGE**

(57)  A device, a datastructure and computer implemented methods for finding a matched semantic name for a region of a digital image (226) and for training for finding a matched semantic name for a region of a digital image (226), wherein the method for training comprises providing the digital image (226) and a class name and an indicator, in particular a bounding box or a mask (212), that identifies the region in the digital image (226), providing a set (220) of candidate names (218) depending on the class name, determining an encoding (224) of the digital image (226), determining multi-scale features (214) depending on the encoding (214) of the digital image (226), determining an embedding (216) of the candidate name (218), determining an output comprising a predicted indicator, in particular a predicted bounding box or a predicted mask, and a predicted class for the respective candidate name (218) depending on an output embedding of a transformer decoder (202) for the embedding (216) of the candidate name (218), the multi-scale features (214) and the mask (212), determining per-pixel features (230) depending on the multi-scale features (214), and training the transformer decoder (202) depending on a loss (238) that comprises a difference between the indicator (212) and the predicted indicator that reproduces the indicator (212) better than the other predicted indicators.

Fig. 2

**EP 4 604 072 A1**

**Description**

Background

The invention relates to a computer implemented method, a datastructure and a device for finding a matched semantic name for a region of a digital image or for training, in particular a transformer decoder and/or a pixel decoder, for finding a matched semantic name for a region of a digital image.

Transformer decoder with masked attention assign different semantic names to different regions of a digital image.

Disclosure of the invention

The computer implemented methods, datastructure and device according to the independent claims provide a refinement of the semantic name that is given to a region of a digital image.

The computer implemented method for finding a matched semantic name for a region of a digital image comprises providing the digital image and a class name, providing an indicator, in particular a bounding box or a mask, that identifies the region in the digital image, providing a set of candidate names depending on the class name, determining an encoding of the digital image, determining multi-scale features depending on the encoding of the digital image, determining an embedding of the candidate name, determining an output comprising a predicted indicator, in particular a predicted bounding box or a predicted mask, and a predicted class for the respective candidate name depending on an output embedding of a transformer decoder for the embedding of the candidate name, the multi-scale features and the indicator, and selecting the candidate name from the set that is associated with the predicted indicator that reproduces the indicator better than the other predicted indicators as semantic name for the region of the digital image depending on the output. This method refines the names per region and is thus usable for digital images with complex scenes.

Providing the candidate name may comprise querying a promptable language model, in particular a Generative Pretrained Transformer (GPT), to output the candidate names for the class name. The GPT can generate multiple reasonable names.

The method may comprise providing the digital image with a caption or determining a caption depending on the digital image, in particular with an image caption model, and wherein providing the candidate name comprises selecting the candidate names for the class name from the caption. The caption comprises multiple reasonable names.

The method may comprise determining the encoding of the digital image with a vision encoder, in particular the Contrastive Language-Image Pre-training (CLIP) image encoder or the method DINO, and/or determining the embedding of the candidate name with a text encoder, in particular the Contrastive Language-Image Pre-training text encoder. A paired vision encoder and text encoder, e.g. CLIP may be used. It is not required to use a paired vision encoder and text encoder. For example, DINO may be used as vision encoder and the text encoder part of CLIP may be used.

The method may comprise determining the output embedding with the transformer decoder, wherein the transformer decoder comprises a masked cross attention layer with an input for the embedding of the candidate name and the multi-scale features, and the mask, wherein the masked cross attention layer is followed by a self-attention layer, wherein the self-attention layer is followed by a feed-forward network, wherein the feed-forward network is configured to output the output embedding. This order reduces the computational resources required for implementing the transformer decoder.

The method may comprise determining per-pixel features depending on the multi-scale features, in particular determining the multi-scale features and the per-pixel features with a pixel decoder depending on the encoding of the digital image.

A computer implemented method for training for finding a matched semantic name for a region of a digital image comprises providing the digital image and a class name and a mask that identifies the region in the digital image, providing a candidate name depending on the class name, determining an encoding of the digital image, determining multi-scale features depending on the encoding of the digital image, determining an embedding of the candidate name, determining an output comprising a predicted indicator, in particular a predicted bounding box or a predicted mask, and a predicted class for the respective candidate name depending on an output embedding of a transformer decoder for the embedding of the candidate name, the multi-scale features and the indicator, determining per-pixel features depending on the multi-scale features, and training the transformer decoder depending on a loss that comprises a difference between the indicator and the predicted indicator that reproduces the indicator better than the other predicted indicators. This method trains the transformer decoder to refine the names per region and is thus usable for digital images with complex scenes.

The method for training may comprise determining the output embedding for a plurality of candidate names for the same digital image and mask, wherein the loss comprises a, in particular a normalized, linear mapping of the output embeddings.

The method for training may comprise determining the multi-scale features and the per-pixel features with a pixel decoder depending on the encoding of the digital image, and training the pixel decoder depending on the loss.

The method for training may comprise determining the encoding of the digital image with a visual encoder, determining the embedding of the candidate name with a text encoder, and maintaining the visual encoder and/or the text encoder unchanged in the training. This means pre-trained, off the shelf text encoder or visual encoder may be used.

A device for finding a matched semantic name for a region of a digital image or for training, in particular a transformer decoder and/or a pixel decoder, for finding a matched semantic name for a region of a digital image, comprises at least one processor and at least one memory, wherein the at least one memory stores instructions that, when executed by the at least one processor, cause the device to execute the method for finding the matched semantic or for training.

A datastructure for finding a matched semantic name for a region of a digital image or for training, in particular a transformer decoder, for finding a matched semantic name for a region of a digital image, comprises at least one data field for the digital image, for a class name, for a mask that identifies the region in the digital image, for a candidate name that is determined depending on the class name, for an encoding of the digital image, for multi-scale features that are determined depending on the encoding of the digital image, for an embedding of the candidate name, for an output embedding, in particular of the transformer decoder for the embedding of the candidate name, the multi-scale features and the indicator, and for an output representing the candidate name that is determined depending on the output embeddings.

In particular for training, the datastructure may comprise at least one data field for per-pixel features that are determined depending on the multi-scale features, and for a loss that comprises a pixel-wise multiplication of the per-pixel features with the output representing the candidate name.

The datastructure may comprise at least one data field for a, in particular normalized, linear mapping of the output embeddings.

Further advantageous embodiments are derived from the following description and the drawing. In the drawing:

Fig. 1 schematically depicts a device for finding a matched semantic name for a region of a digital image or for training, in particular a transformer decoder and/or a pixel decoder for finding a matched semantic name for a region of a digital image,
Fig. 2 schematically depicts an overview of a training of the transformer decoder and/or the pixel decoder,
Fig. 3 schematically depicts an overview of a candidate name generation,
Fig. 4 schematically depicts a datastructure,
Fig. 5 depicts a flowchart with steps of a method for finding a matched semantic name for a region of a digital image,
Fig. 6 depicts a flow chart with steps of a method for the training.

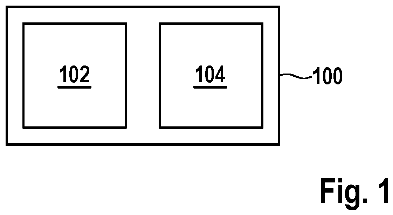

Figure 1 schematically depicts a device 100. The device 100 comprises at least one processor 102 and at least one memory 104.

According to an example, the device 100 is configured for finding a matched semantic name for a region of a digital image.

According to an example, the device is configured for training, in particular a transformer decoder and/or a pixel decoder, for finding a matched semantic name for a region of a digital image.

The at least one memory 104 stores instructions that, when executed by the at least one processor 102, cause the device to execute a method for finding the matched semantic name or for training.

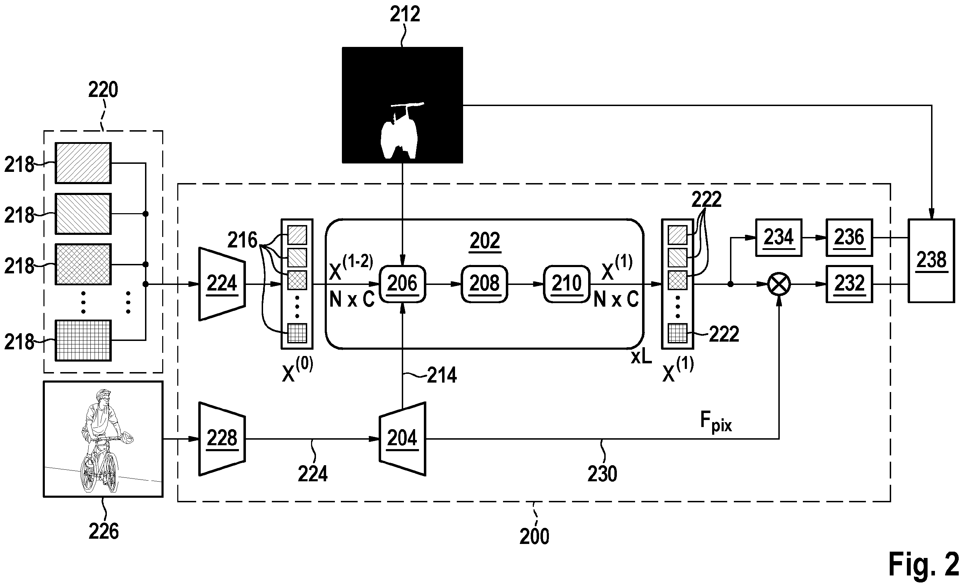

Figure 2 schematically depicts a model 200 for finding the matched semantic name. The model 200 comprises a transformer decoder 202 and a pixel decoder 204.

Figure 2 schematically depicts an overview of the training of the transformer decoder 202 and/or the pixel decoder 204.

The transformer decoder 202 in the example is an artificial neural network. The transformer decoder 202 in the example comprises L layers. The transformer decoder 202 in the example comprises in each layer l a cross attention layer 206, a self-attention layer 208, and a feed forward network 210. The cross attention layer 206 is followed by the self-attention layer 208. The self-attention layer 208 is followed by the feed forward network 210. In the example, followed means that the output of the cross attention layer 206 is the input of the self-attention layer 208. In the example, the output of the self-attention layer 208 is the input of the feed forward layer 210. There may be layers in between these layers.

The cross attention layer 206 comprises an input for a mask 212 and multi-scale features 214 from the pixel decoder 204 and an embedding 216 of a candidate name 218.

The mask 212 is an example for an indicator indicating the region. Instead of the mask 212, the indicator may be a bounding box.

In the example, a set 220 of candidate names 218 is provided. In the example, the set 220 of candidate names 218 is associated with a class $c_i$. The candidate name 218 is provided from the set 220 of candidate class names 218.

The transformer decoder 202 is configured to output, for an embedding 216 of a candidate class name 218 an output embedding 222. The model 200 is configured to determine an output of the model depending on the output embedding 222. The output of the model comprises a predicted mask, and a predicted class for the respective candidate name 218.

In case that the indicator is the bounding box, the model 200 may be configured to output the output of the model comprising a predicted bounding box instead of the predicted mask.

The transformer decoder 202 is configured to determine the output 222 iteratively in L iterations. According to the example, the embedding 216 of the candidate name 218 is an initial input $X^{(0)}$ and the output 222 is the result of a last iteration $X^{(L)}$. In the example, the input $X^{(l-1)}$ of an iteration and the output $X^{(l)}$ of an iteration has the dimensions N x C.

The transformer decoder 202 in the example is configured as described in Bowen Cheng, Ishan Misra, Alexander G. Schwing, Alexander Kirillov, and Rohit Girdhar. Masked-attention mask transformer for universal image segmentation. In Proc. IEEE Conf. on Computer Vision and Pattern Recognition (CVPR), 2022 (Mask2Former).

The embedding 216 of the candidate class name 218 in the example is determined with a text encoder 224. The text encoder 224 is configured to encode the candidate name 218 to its embedding 216. The text encoder 224 may be CLIP. The text encoder 224 in the example is pre-trained.

Figure 2 depicts a plurality of candidate class names 218, their respective embeddings 216 and the outputs 222 of the transformer decoder 202 for the embedding 216 of the respective candidate name 218.

The pixel decoder 204 is configured to determine the multi scale features 214 from an embedding 224 of a digital image 226. In the example, the embedding 224 of the digital image 226 is determined with a visual encoder 228.

The visual encoder 228 may be CLIP or DINO. The visual encoder 228 in the example is pre-trained.

The pixel decoder 204 is configured to output per-pixel features 230 of dimension H x W x C, denoted as $F_{pix}$.

For the output 222 of the transformer decoder 202 of an iteration I an intermediate mask $\hat{M}^{(l)}$ is determined as a pixel-wise product 232 of the per-pixel features 230 and the respective candidate name 218.

The pixel-wise product 232 in the example is an intermediate mask $\hat{M}^{(l)}$ determined as:

$$\widehat{M}^{(l)} = sigmoid\left(X^{(l)} * F_{pix}\right)$$

wherein * refers to the pixel wise multiplication.

For the output 222 of the transformer decoder 202 of an iteration, a predicted class $\hat{c}^{(l)}$ is determined with a linear layer 234 that outputs a linear mapping 236, i.e. the class $\hat{c}^{(l)}$:

$$\hat{c}^{(l)} = softmax\left[Linear\left(X^{(l)}\right)\right]$$

The final prediction, i.e., the final mask $\hat{M}^{(L)}$ and the final class $\hat{c}^{(L)}$ in the output of the model 200, is made depending on the result $X^{(L)}$ of the last iteration L.

The mask 212 of a training data point i is denoted $M_i$. The mask $M_i$ identifies a region in the digital image 226.

For training, a loss 238, denoted as $L_i$ for the training data point i, is used that depends on the mask $M_i$, the best predicted class $\hat{c}_{best}$ of the predicted classes $\hat{c}^{(l)}$ and the best predicted mask $\hat{M}_{best}$ of the masks $\hat{M}^{(l)}$:

$$L_i = L_{mask}\left(M_i, \widehat{M}_{best}\right) + L_{class}(c_i, \hat{c}_{best})$$

wherein $L_{mask}$ is the mask localization function and $L_{class}$ is the classification loss function in Mask2Former.

With training data comprising pairs of ground-truth mask $M_i$ and class $c_i$, and with both the vision and text encoder kept frozen, the transformer decoder 202 is trained together with the pixel decoder 204 for segmentation. To recover the ground-truth mask $M_i$ and class $c_i$, the transformer decoder 202 makes multiple mask and class predictions with candidate names from the class $c_i$. In the example, the prediction with the highest Intersection over Union (IoU) with $M_i$ is selected for loss computation.

According to an example, to provide extra supervision on the name quality, the candidate names in the training data may be appended with a "negative" name randomly selected from a different category than the ground-truth class $c_i$. If a "negative" name scores the highest IoU, the predictions are supervised with an empty mask and a "void" class. The void class is one extra class in addition to the training classes:

$$L_i = L_{mask}\left(0, \widehat{M}_{best}\right) + L_{class}(K + 1, \hat{c}_{best})$$

Having both the positive and negative supervision, we effectively incentivize the model to favor names of high quality and penalize those of low quality, thereby aiding in the accurate identification of the best-matching names for each segment.

According to an example, after the training with the training data including the negative names, the model 200 is run on the training data with ground-truth classes $c_i$ and without the negative names again, i.e. using ground-truth masks $M_i$ as attention biases and leaving out the negative name appending. In the example, the candidate name that generates the mask prediction with the highest IoU with the ground-truth mask $M_i$ is associated to the ground-truth mask $M_i$.

According to an example, for the ground-truth class $c_i$, the candidate names that the model 200 selects for the training data are aggregated and sorted based, e.g., on their frequency in matching with ground-truth masks $M_i$. To retain the most precise names and discard less common, potentially noisy candidate names, the top-ranking candidate names may be selected, such that they can cover e.g. at least 90% total frequencies. The top-ranking candidate names are the renovated names for that ground-truth class $c_i$.

The top-ranking candidate names for the ground-truth classes $c_i$ are more descriptive and precise than the original class names of the ground-truth classes

$c_i$. When using the top-ranking candidate names as text prompts, a pre-trained open-vocabulary model achieves much higher segmentation performance than using the original class names.

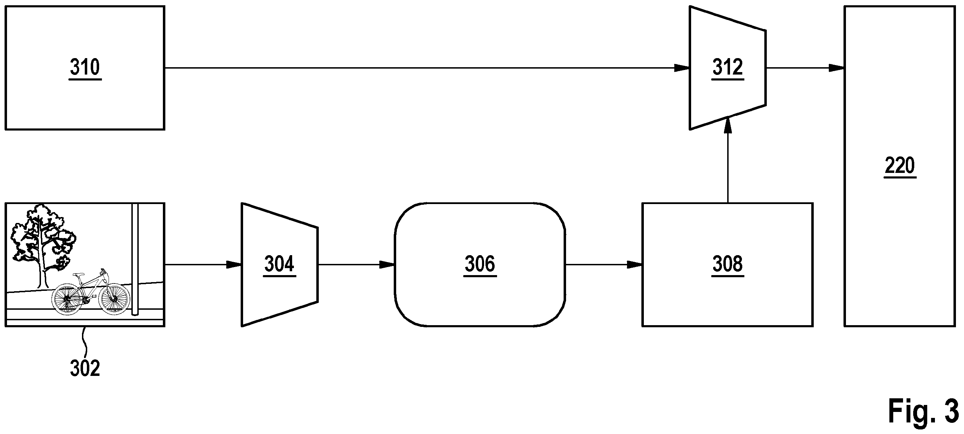

Figure 3 schematically depicts an overview of a candidate name generation.

The candidate name generation is based on digital images of the classes $c_i$.

A digital image 302 for a class $c_i$ is provided to an image caption model 304. The caption model 304 is configured to output caption nouns 306 for the digital image 302 from the set. According to an example, the image caption model 304 outputs the nouns tree, pavement, hedge, mountain bike, bicycle rack, grass, sidewalk, building, saddlebag. In the example, the caption nouns 306 are determined for a set of digital images of the class $c_i$ comprising the digital image 302.

The nouns from the caption nouns that the image caption model 304 generates for the set of digital images of the class $c_i$ are aggregated and sorted to context names 308 for the class $c_i$. According to an example, the context names 308 comprise the nouns building, road, person, park, pavement, car, walk, city street, bicycle, street corner.

The class $c_i$ is associated with a class name 310. In the example, the set 220 of candidate names 218 is provided for the class $c_i$ that is associated with the class name 310. According to the example, the class name bicycle is associated with the class $c_i$.

The class name 310 of the class $c_i$ and the context names 308 generated for the class $c_i$ are input to a Generative Pretrained Transformer, GPT, 312, that is configured to output the set 220 of candidate names 218 for the class $c_i$.

In the example, the GPT 312 outputs city bike, bicycle, road bicycle, tandem bike, cruiser, pavement bike, recreational bike, mountain bike, pedestrian bicycle.

According to an example of K classes $c_i$, the candidate names 218 are determined for the respective class $c_i$ from a set of digital images and the class name for the respective class $c_i$.

This means, the GPT 312 selects the candidate names from the caption of the digital images. The caption comprises multiple reasonable names. The candidate names may be selected from the caption directly as well.

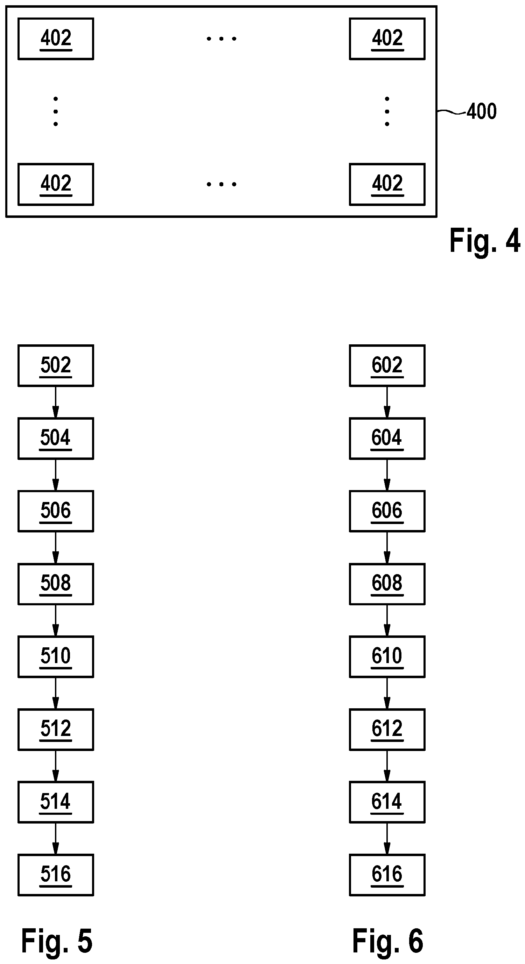

Figure 4 schematically depicts a datastructure 400 for finding the matched semantic name for a region of the digital image 226.

The datastructure 400 comprises at least one data field 402 for the digital image 226, for the class name 310, for the mask 212 that identifies the region in the digital image 226, for at least one candidate name 218 that is determined depending on the class name 310, for the encoding 214 of the digital image 226, for multi-scale features 214 that are determined depending on the encoding 214 of the digital image 226, for an embedding 216 of the candidate name 218, and for an output 222 representing the candidate name 218 that is determined depending on the embedding 216 of the candidate name 218, the multi-scale features 214 and the mask 212.

The datastructure 400 may in particular for training comprises at least one data field 402 for per-pixel features 230 that are determined depending on the multi-scale features 214, and for a loss 238 that comprises a pixel-wise multiplication 232 of the per-pixel features 230 with the output 222 representing the candidate name 218.

The datastructure 400 may comprise at least one data field 402 for a, in particular normalized, linear mapping 236 of the outputs 222.

Figure 5 depicts a flow chart comprising steps of a computer implemented method for finding a matched semantic name for a region of the digital image 226.

The steps of the method are described for the digital image 226 that is associated to the class name 310.

The method comprises a step 502.

The step 502 comprises providing 502 the digital image 226 and the class name 310.

In the example, the class name 310 is associated to the digital image 226. For example, a classification of the digital image 226 is executed that associates the class name 310 to the digital image 226.

The method comprises a step 504.

The step 504 comprises providing the mask 212. The mask 212 identifies the region in the digital image 226.

The method comprises a step 506.

The step 506 comprises providing at least one candidate name 218 depending on the class name 310. In the example the set 220 of candidate names 218 is provided.

According to an example, providing the at least one candidate name 218 comprises querying the Generative Pretrained Transformer 312 to output the set 220 of candidate names 218 for the class name 310. Providing the at least one candidate name may comprise selecting the candidate names 218 for the class name 310 from the caption 306.

According to an example, the method comprises providing the digital image 226 with the caption. The caption for example comprises the caption nouns 306. According to an example, the method comprises determining the caption, e.g., the caption nouns 306, depending on the digital image 226.

The method may comprise determining the caption with a caption model. In an example, the caption nouns 306 are determined with the image caption model 304.

The method comprises a step 508.

The step 508 comprises determining the encoding 214 of the digital image 226.

The method may comprise determining the encoding 224 of the digital image 226 with the vision encoder 228. The vision encoder 228 may be the CLIP neural network or the method DINO.

The method comprises a step 510.

The step 510 comprises determining the embedding 216 of the candidate name 218. The method may comprise or determining the embedding 216 of the candidate name 218 with the text encoder 224, in particular the CLIP neural network.

The step 510 is executed for the candidate names 218 in the set 220 of candidate names 218.

The method comprises a step 512.

The step 512 comprises determining multiscale features 214 depending on the encoding 214 of the digital image 226.

The step 512 comprises determining per-pixel features 230 depending on the multi-scale features 214 depending on the encoding 224 of the digital image 226.

According to an example, the multi-scale features 214 and the per-pixel features 230 are determined with the pixel decoder 204.

In the example, the per-pixel features 230 are determined for a plurality of candidate names 218.

The method comprises a step 514.

The step 514 comprises determining the output of the model 200. Determining the output of the model 200 comprises determining the output 222 for the respective candidate names 218 of the set 220 depending on the respective embeddings 216 of the candidate names 218 of the set 220, the multi-scale features 214 and the mask 212.

Determining the output of the model 200 comprises determining the output 222 of the transformer decoder 202 and the output of the model 200 in iterations.

The output of the model 200 is the final prediction, i.e., the final mask $\hat{M}^{(L)}$ and the final class $\hat{c}^{(L)}$ that is made depending on the result $X^{(L)}$ of the last iteration L.

The output 222 in the example is determined with the transformer decoder 202.

This means, for at least one candidate name 218, the output 222 is determined with the transformer decoder 202 comprising the masked cross attention layer 206 with the input for the embedding 216 of the candidate name 218 and the multi-scale features 214, and the mask 212.

This means, the output 222 is determined for the candidate names 218 of the set 220 of candidate names 218 for the digital image 226 and the mask 212.

The method comprises a step 516.

The step 516 comprises selecting the candidate name 218 that is associated with the predicted mask $\hat{M}_{best}$ that reproduces the mask 212 better than the other predicted masks $\hat{M}_{other} = \hat{M}^{(l)} \backslash \hat{M}_{best}$ as semantic name for the region of the digital image 226 depending on the output of the model 200.

This means, in the set 220 of candidate names, the candidate name 218 that is associated with the predicted indicator that reproduces the indicator 212 better than the other predicted indicators is selected as semantic name for the region of the digital image 226 depending on the output of the model 200.

According to an example, the intersection over union of respective predicted mask $\hat{M}^{(l)}$ and the mask 212 is computed as measure for the correlation. The measure for correlation, e.g., the intersection over union, indicates how well a predicted mask $\hat{M}^{(l)}$ reproduces the mask 212

The measure for the correlation may be determined for the candidate names 218 in the set 220 of candidate names 218.

According to an example, the at least one candidate name 218 is selected as semantic name for the region of the digital image 226 that results in the measure that indicates a higher correlation, e.g., a higher intersection over union, than the other measures.

According to an example, the candidate name 218 is selected that results in the measure that indicates the largest correlation.

Figure 6 depicts a flow chart with steps of a method for the training.

The method for training comprises a step 602.

The step 602 comprises providing training data.

The training data comprises a plurality of digital images associated to a respective ground truth class and a respective ground truth mask.

The training data comprises a plurality of ground-truth classes $c_i$ and ground-truth masks $M_i$.

The class name 310 is an example for the ground-truth classes $c_i$. The mask 212 is an example for the ground-truth masks $M_i$.

The method for training comprises running the model 200 as described for the exemplary class name 310 and the exemplary ground truth mask 212.

The training data for example comprises the digital image 226 and the class name 310 and the mask 212 that identifies the region in the digital image 226.

The method for training comprises executing the following steps for each of the digital images of the training data. The following steps are described by way of example of the digital image 226 that is associated with the class name 310. The method for training comprises a step 604.

The step 604 comprises providing candidate names 218 depending on the class name 310.

The step 604 comprises providing the set 220 of candidate names 218 depending on the class name 310.

The candidate class names 218 may be determined as described in step 506.

According to an example, for the ground-truth class 310, the candidate names 218 that the model 200 selects for the training data from the set 220 of candidate names 218 are aggregated and sorted based, e.g., on their frequency in matching with ground-truth masks 212. To retain the most precise names and discard less common, potentially noisy candidate names, the top-ranking candidate names may be selected, such that they can cover e.g. at least 90% total frequencies. The top-ranking candidate names are the renovated names for that ground-truth class 310.

The method for training comprises a step 606.

The step 606 comprises determining the encoding 224 of the digital image 226.

The method for training may comprise determining the encoding 224 of the digital image 226 with the visual encoder 228.

The method for training comprises a step 608.

The step 608 comprises determining the embedding s 216 of the candidate names 218 in the set 220 of candidate names 218.

The method for training may comprise determining the embedding 216 of the candidate name 218 with the text encoder 224.

The method for training comprises a step 610.

The step 610 comprises determining multi-scale features 214 depending on the encoding 214 of the digital image 226.

The method for training comprises a step 612.

The step 612 comprises determining the per-pixel features 230 depending on the multi-scale features 214.

According to an example, the multi-scale features 214 and the per-pixel features 230 are determined with the pixel decoder 204 depending on the encoding 214 of the digital image 226.

The method for training comprises a step 614.

The step 614 comprises determining the output of the model 200. Determining the output of the model 200 comprises determining the output 222 representing the candidate names 218.

Determining the output of the model 200 comprises determining the output 222 of the transformer decoder 202 and the output of the model 200 in iterations.

The output of the model 200 is the final prediction, i.e., the final mask $\hat{M}^{(L)}$ and the final class $\hat{c}^{(L)}$ that is made depending on the result $X^{(L)}$ of the last iteration L.

The output 222 for a respective candidate name 218 is determined in the example with the transformer decoder 202 depending on the embedding 216 of the respective candidate name 218, the multi-scale features 214 and the mask 212.

This means, the output 222 may be determined for a plurality of candidate names 218 for the same digital image 226 and mask 212.

The method for training comprises a step 616.

The step 616 comprises training the transformer decoder 202 depending on the loss 238. The step 616 may comprise training the pixel decoder 204 depending on the loss 238.

In the example, the candidate name that generates the mask prediction with the highest IoU with the ground-truth mask $M_i$ is used to determine the loss 238.

The method for training may comprise maintaining the visual encoder 228 and/or the text encoder 224 unchanged in the training.

The class name 310 is an example for the ground-truth classes $c_i$. The mask 212 is an example for the ground-truth masks $M_i$.

The method for training comprises running the model 200 as described in the following steps of the method for training for a plurality of ground-truth classes $c_i$ and ground-truth masks $M_i$.

According to an example, the method for training comprises running the model 200 with the training data including the negative names.

According to an example, after the training with the training data including the negative names, the model 200 is run on the training data with ground-truth classes $c_i$ and without the negative names again, i.e. using ground-truth masks $M_i$ as attention biases and leaving out the negative name appending.

The method for training may comprise determining the parameters of the transformer decoder 202 and/or the pixel decoder 204 with a gradient descent method based on the loss that is determined for the training data.

**Claims**

1. A computer implemented method for finding a matched semantic name for a region of a digital image (226), **characterized in that** the method comprises providing (502) the digital image (226) and a class name (310), providing (504) an indicator, in particular a bounding box or a mask (212) that identifies the region in the digital image (226), providing (506) a set (220) of candidate names (218) depending on the class name (310), determining (508) an encoding (214) of the digital image (226), determining (512) multi-scale features (214) depending on the encoding (214) of the digital image (226), determining (510) an embedding (216) of the candidate name (218), determining (514) an output comprising a predicted indicator, in particular a predicted bounding box or a predicted mask, and a predicted class for the respective candidate name (218), depending on an output embedding (222) of a transformer decoder (202) for the embedding (216) of the candidate class (218) name, the multi-scale features (214) and the indicator (212), and selecting (516) the candidate name (218) from the set (220) that is associated with the predicted indicator that reproduces the indicator (212) better than the other predicted indicators as semantic name for the region of the digital image (226) depending on the output.

2. The method according to claim 1, **characterized in that** providing (506) the candidate name (218) comprises querying a promptable language model, in particular a Generative Pretrained Transformer (312), to output the candidate names (218) for the class name (310).

3. The method according to claim 1, **characterized in that** the method comprises providing the digital image (226) with a caption (306) or determining a caption (306) depending on the digital image (226), in particular with an image caption model (304), and wherein providing (506) the candidate name comprises selecting the candidate names (218) for the class name (310) from the caption (306).

4. The method according to one of the previous claims, wherein the method comprises determining (508) the encoding (224) of the digital image (226) with a vision encoder (228), in particular the Contrastive Language-Image Pre-training (CLIP) neural network or the method DINO, and/or determining (510) the embedding (216) of the candidate name (218) with a text encoder (224), in particular the Contrastive Language-Image Pre-training (CLIP) neural network.

5. The method according to one of the previous claims, wherein the method comprises determining (514) the output embedding (222) with the transformer decoder (202), wherein the transformer decoder (202) comprises a masked cross attention layer (206) with an input for the embedding (216) of the candidate name and the multi-scale features (214), and the mask (212), wherein the masked cross attention layer (206) is followed by a self-attention layer (208), wherein the self-attention layer (208) is followed by a feed-forward network (210), wherein the feed-forward network (212) is configured to output the output embedding (222).

6. The method according to one of the previous claims, wherein the method comprises determining (512) per-pixel features (230) depending on the multi-scale features (214), in particular determining the multi-scale features (214) and the per-pixel features (230) with a pixel decoder (204) depending on the encoding (224) of the digital image (226).

7. A computer implemented method for training for finding a matched semantic name for a region of a digital image (226), **characterized in that** the method comprises providing (602) the digital image (226) and a class name (310) and an indicator, in particular a bounding box or a mask (212), that identifies the region in the digital image (226), providing (604) a set (220) of candidate names (218) depending on the class name (310), determining (606) an encoding (224) of the digital image (226), determining (610) multi-scale features (214) depending on the encoding (214) of the digital image (226), determining (608) an embedding (216) of the candidate name (218), determining (614) an output comprising a predicted indicator, in particular a predicted bounding box or a predicted mask, and a predicted class for the respective candidate name (218) depending on an output embedding (222) of a transformer decoder (202) for the embedding (216) of the candidate name

(218), the multi-scale features (214) and the indicator (212), determining (612) per-pixel features (230) depending on the multi-scale features (214), and training (616) the transformer decoder (202) depending on a loss (238) that comprises a difference between the indicator (212) and the predicted indicator that reproduces the indicator (212) better than the other predicted indicators.

8. The computer implemented method according to claim 7, **characterized in that** the method comprises determining (614) the output embedding (222) for a plurality of candidate names (218) for the same digital image (226) and mask (212), wherein the loss (238) comprises a, in particular a normalized, linear mapping (236) of the output embedding (222).

9. The computer implemented method according to claim 7 or 8, **characterized in that** the method comprises determining (610, 612) the multi-scale features (214) and the per-pixel features (230) with a pixel decoder (204) depending on the encoding (214) of the digital image (226), and training (616) the pixel decoder (204) depending on the loss (238).

10. The computer implemented method according to one of the claims 7 to 9, **characterized in that** the method comprises determining (606) the encoding (224) of the digital image (226) with a visual encoder (228), determining (608) the embedding (216) of the candidate name (218) with a text encoder (224), and maintaining the visual encoder (228) and/or the text encoder (224) unchanged in the training.

11. Device (100) for finding a matched semantic name for a region of a digital image or for training, in particular a transformer decoder (202) and/or a pixel decoder (204), for finding a matched semantic name for a region of a digital image, wherein the device (100) comprises at least one processor (102) and at least one memory (104), wherein the at least one memory (104) stores instructions that, when executed by the at least one processor (102), cause the device to execute the method according to one of the claims 1 to 10.

12. Datastructure (400) for finding a matched semantic name for a region of a digital image (226) or for training, in particular a transformer decoder (204), for finding a matched semantic name for a region of a digital image (226), wherein the data structure comprises at least one data field (402) for the digital image (226), for a class name (310), for an indicator, in particular a bounding box or a mask (212) that identifies the region in the digital image (226), for a candidate name (218) that is determined depending on the class name (310), for an encoding (214) of the digital image (226), for multi-scale features (214) that are determined depending on the encoding (214) of the digital image (226), for an embedding (216) of the candidate name (218), for an output embedding (222), in particular of the transformer decoder (204) for the embedding (216) of the candidate name (218), the multi-scale features (214) and the indicator (212), and for an output comprising a predicted indicator, in particular a predicted bounding box or a predicted mask, and a predicted class for the respective candidate name (218) that is determined depending on the output embeddings (222).

13. The datastructure (400) according to claim 12, in particular for training, **characterized in that** the datastructure (400) comprises at least one data field (402) for per-pixel features (230) that are determined depending on the multi-scale features (214), and for a loss (238) that comprises a difference between the indicator (212) and the predicted indicator that reproduces the indicator (212) better than the other predicted indicators.

14. The datastructure (400) according to claim 13, **characterized in that** the datastructure (400) comprises at least one data field (402) for a, in particular normalized, linear mapping (236) of the output embeddings (222).

**Amended claims in accordance with Rule 137(2) EPC.**

1. A computer implemented method for finding a matched semantic name for a region of a digital image (226), **characterized in that** the method comprises providing (502) the digital image (226) and a class name (310), providing (504) an indicator, in particular a bounding box or a mask (212) that identifies the region in the digital image (226), providing (506) a set (220) of candidate names (218) depending on the class name (310), determining (508) an encoding (214) of the digital image (226), determining (512) multi-scale features (214) depending on the encoding (214) of the digital image (226), determining (510) an embedding (216) of the candidate name (218), determining (514) an output comprising a predicted indicator, in particular a predicted bounding box or a predicted mask, and a predicted class for the respective candidate name (218), depending on an output embedding (222) of a transformer decoder (202) for the embedding (216) of the candidate class (218) name, the multi-scale features (214) and the indicator (212), and selecting (516) the candidate name (218) from the set (220) that is associated with the predicted indicator that reproduces the indicator (212) better than the other predicted indicators as semantic name for the region of the digital image (226) depending on the output.

2. The method according to claim 1, **characterized in that** providing (506) the candidate name (218) comprises querying a promptable language model, in particular a Generative Pretrained Transformer (312), to output the candidate names (218) for the class name (310).

3. The method according to claim 1, **characterized in that** the method comprises providing the digital image (226) with a caption (306) or determining a caption (306) depending on the digital image (226), in particular with an image caption model (304), and wherein providing (506) the candidate name comprises selecting the candidate names (218) for the class name (310) from the caption (306).

4. The method according to one of the previous claims, wherein the method comprises determining (508) the encoding (224) of the digital image (226) with a vision encoder (228), in particular the Contrastive Language-Image Pre-training (CLIP) neural network or the method DINO, and/or determining (510) the embedding (216) of the candidate name (218) with a text encoder (224), in particular the Contrastive Language-Image Pre-training (CLIP) neural network.

5. The method according to one of the previous claims, wherein the method comprises determining (514) the output embedding (222) with the transformer decoder (202), wherein the transformer decoder (202) comprises a masked cross attention layer (206) with an input for the embedding (216) of the candidate name and the multi-scale features (214), and the mask (212), wherein the masked cross attention layer (206) is followed by a self-attention layer (208), wherein the self-attention layer (208) is followed by a feed-forward network (210), wherein the feed-forward network (212) is configured to output the output embedding (222).

6. The method according to one of the previous claims, wherein the method comprises determining (512) per-pixel features (230) depending on the multi-scale features (214), in particular determining the multi-scale features (214) and the per-pixel features (230) with a pixel decoder (204) depending on the encoding (224) of the digital image (226).

7. A computer implemented method for training for finding a matched semantic name for a region of a digital image (226), **characterized in that** the method comprises providing (602) the digital image (226) and a class name (310) and an indicator, in particular a bounding box or a mask (212), that identifies the region in the digital image (226), providing (604) a set (220) of candidate names (218) depending on the class name (310), determining (606) an encoding (224) of the digital image (226), determining (610) multi-scale features (214) depending on the encoding (214) of the digital image (226), determining (608) an embedding (216) of the candidate name (218), determining (614) an output comprising a predicted indicator, in particular a predicted bounding box or a predicted mask, and a predicted class for the respective candidate name (218) depending on an output embedding (222) of a transformer decoder (202) for the embedding (216) of the candidate name (218), the multi-scale features (214) and the indicator (212), determining (612) per-pixel features (230) depending on the multi-scale features (214), and training (616) the transformer decoder (202) depending on a loss (238) that comprises a difference between the indicator (212) and the predicted indicator that reproduces the indicator (212) better than the other predicted indicators.

8. The computer implemented method according to claim 7, **characterized in that** the method comprises determining (614) the output embedding (222) for a plurality of candidate names (218) for the same digital image (226) and mask (212), wherein the loss (238) comprises a, in particular a normalized, linear mapping (236) of the output embedding (222).

9. The computer implemented method according to claim 7 or 8, **characterized in that** the method comprises determining (610, 612) the multi-scale features (214) and the per-pixel features (230) with a pixel decoder (204) depending on the encoding (214) of the digital image (226), and training (616) the pixel decoder (204) depending on the loss (238).

10. The computer implemented method according to one of the claims 7 to 9, **characterized in that** the method comprises determining (606) the encoding (224) of the digital image (226) with a visual encoder (228), determining (608) the embedding (216) of the candidate name (218) with a text encoder (224), and maintaining the visual encoder (228) and/or the text encoder (224) unchanged in the training.

11. Device (100) for finding a matched semantic name for a region of a digital image or for training, in particular a transformer decoder (202) and/or a pixel decoder (204), for finding a matched semantic name for a region of a digital image, wherein the device (100) comprises at least one processor (102) and at least one memory (104), wherein the at least one memory (104) stores instructions that, when executed by the at least one processor (102), cause the device to execute the method according to one of the claims 1 to 10.

12. Datastructure (400) for finding a matched semantic name for a region of a digital image (226) or for training, in particular a transformer decoder (204), for finding a matched semantic name for a region of a digital image (226), wherein the data structure comprises at least one data field (402) comprising the digital image (226), a class name (310), an indicator, in particular a bounding box or a mask (212) that identifies the region in the digital image (226), a candidate name (218) that is determined depending on the class name (310), an encoding (214) of the digital image (226), multi-scale features (214) that are determined depending on the encoding (214) of the digital image (226), an embedding (216) of the candidate name (218), an output embedding (222), in particular of the transformer decoder (204) for the embedding (216) of the candidate name (218), the multi-scale features (214) and the indicator (212), and an output comprising a predicted indicator, in particular a predicted bounding box or a predicted mask, and a predicted class for the respective candidate name (218) that is determined depending on the output embeddings (222).

13. The datastructure (400) according to claim 12, in particular for training, **characterized in that** the datastructure (400) comprises at least one data field (402) comprising per-pixel features (230) that are determined depending on the multi-scale features (214), and a loss (238) that comprises a difference between the indicator (212) and the predicted indicator that reproduces the indicator (212) better than the other predicted indicators.

14. The datastructure (400) according to claim 13, **characterized in that** the datastructure (400) comprises at least one data field (402) comprising a, in particular normalized, linear mapping (236) of the output embeddings (222).

**Fig. 1**

Fig. 2

Fig. 3

Fig. 4

Fig. 5

Fig. 6

**Europäisches Patentamt**
**European Patent Office**
**Office européen des brevets**

# EUROPEAN SEARCH REPORT

**Application Number**

EP 24 15 7956

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JIARUI XU ET AL: "Open-Vocabulary Panoptic Segmentation with Text-to-Image Diffusion Models", ARXIV.ORG, CORNELL UNIVERSITY LIBRARY, 201 OLIN LIBRARY CORNELL UNIVERSITY ITHACA, NY 14853, 5 April 2023 (2023-04-05), XP091476643, | 1-4,6,7, 9-12 | INV. G06V10/25 G06V10/44 G06V10/764 G06V10/82 |
| Y | * abstract * * page 3 - page 6 * | 5,8,13, 14 | |
| Y | CHENG BOWEN ET AL: "Masked-attention Mask Transformer for Universal Image Segmentation", 2022 IEEE/CVF CONFERENCE ON COMPUTER VISION AND PATTERN RECOGNITION (CVPR), IEEE, 18 June 2022 (2022-06-18), pages 1280-1289, XP034194121, DOI: 10.1109/CVPR52688.2022.00135 [retrieved on 2022-09-27] * page 3 - page 4; figure 2 * | 5,8,13, 14 | |
| A,P | HAIWEN HUANG ET AL: "Renovating Names in Open-Vocabulary Segmentation Benchmarks", ARXIV.ORG, CORNELL UNIVERSITY LIBRARY, 201 OLIN LIBRARY CORNELL UNIVERSITY ITHACA, NY 14853, 14 March 2024 (2024-03-14), XP091700005, * the whole document * | 1-14 | TECHNICAL FIELDS SEARCHED (IPC) G06V |

The present search report has been drawn up for all claims

| Place of search | Date of completion of the search | Examiner |
|---|---|---|
| The Hague | 29 May 2024 | Natanni, Francesco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 604 072 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BOWEN CHENG**; **ISHAN MISRA**; **ALEXANDER G. SCHWING**; **ALEXANDER KIRILLOV**; **ROHIT GIRDHAR**. Masked-attention mask transformer for universal image segmentation. *Proc. IEEE Conf. on Computer Vision and Pattern Recognition (CVPR)*, 2022